# EUROPEAN PATENT SPECIFICATION

(11) **EP 2 904 872 B1**
(45) Date of publication and mention of the grant of the patent: **01.08.2018**
(21) Application number: 12886101.0
(22) Date of filing: 05.10.2012
(51) Int. Cl.: H04W 76/14, H04W 84/18, H04W 88/02, H04W 88/04, H04W 88/10

(54) **METHOD, APPARATUS AND COMPUTER PROGRAM FOR SELECTABLE OPERATION OF A NETWORK NODE**
VERFAHREN, VORRICHTUNG UND COMPUTERPROGRAMM FÜR AUSWÄHLBAREN BETRIEB EINES NETZWERKKNOTENS
PROCÉDÉ, APPAREIL ET PROGRAMME INFORMATIQUE POUR L'EXPLOITATION SÉLECTIONNABLE D'UN NOEUD DE RÉSEAU

(43) Date of publication of application: 12.08.2015
(73) Proprietor: Telefonaktiebolaget LM Ericsson (publ), 164 83 Stockholm (SE)
(72) Inventor: GUNNARSSON, Fredrik, 587 50 Linköping (SE); WILHELMSSON, Leif, 247 55 Dalby (SE); TILLMAN, Fredrik, 226 49 Lund (SE)
(74) Representative: Ericsson
(86) International application number: PCT/SE2012/051071
(87) International publication number: WO 2014/054992

(56) References cited:
- WO-A1-2009/027503
- WO-A1-2011/088619
- WO-A1-2012/075630
- WO-A1-2012/123310
- US-A1- 2009 029 645
- US-A1- 2012 198 032
- US-B1- 8 238 318

## Description

### Technical field

The present invention generally relates to a method, apparatus and computer program for selectable operation of a network node within a cellular communication network.

### Background

A cellular network or mobile network is a radio network distributed over land areas called cells, each served by at least one fixed-location transceiver, known as a cell site or base station. When joined together these cells provide radio coverage over a wide geographic area. This enables a large number of transceivers to communicate with each other and with fixed transceivers anywhere in the network, via base stations, and with nodes in other networks interconnected with the network, even if some of the transceivers are moving through more than one cell during transmission.

Wide Area Network can use macrocells, picocells, and/or femtocells in order to offer wireless coverage in an environment with a wide variety of wireless coverage zones, ranging from an open outdoor environment to office buildings, homes, and underground areas. This is often referred to as a heterogeneous network, which is as a network with complex interoperation between macrocell, smaller cells (picocells, femtocells), and in some cases WiFi network elements used together to provide a mosaic of coverage, with handover capability between network elements.

Although the great advantage of a cellular network in sense of mobility is provided by the communication via base stations, further advantages can be provided in some circumstances by allowing some transceivers to communicate directly with each other, or sometimes via a neighbouring transceiver (other than the base station). This can be referred to as device-to-device, D2D, communication. The management of the D2D communication can be controlled or assisted by the network.

Both the heterogeneous network approach and the D2D approach have provided improvements in capacity, reduction of interference levels, saving of power, etc. in their respective ways. However, with evolving demands on services, communication capacity, low power consumption, etc. in communication solutions, there is still a desire to provide improvements.

WO 2012/075630 A1 discloses an approach for supporting simultaneous multi-use of resources of a backhaul link between a relay base station and another base station of a cellular radio network. The relay base station is configured to forward transmission resources of the backhaul link to at least one communication device located in a cell of the relay base station. The communication device is configured to utilize the resources of the backhaul link for D2D connections.

US 2009/0029645 A1 discloses a multi-tier backhaul system that has compact remote transceivers for providing backhaul and is connected to a wireless relay module in a point-to-multipoint fashion.

### Summary

The present invention is based on the understanding that the different benefits from the respective approaches of base station operation and D2D operation can be joined. The inventors have found that by having a network node which is able to work according to D2D operation, further improvements might be achieved. In a first embodiment, the network node operating according to D2D operation is a D2D capable UE which has an available backhaul. In one example, the network node is able of adapting operation to either benefit from ordinary base station operation when that is of most benefit, or benefit from D2D operation when that is of most benefit.

According to a first aspect, there is provided a network node capable to work, within a cellular communication system comprising a plurality of base stations, according to a device-to-device, D2D communication mode, wherein the network node also has backhaul capability via a second communication network distinct from a backbone network of the cellular communication network and is capable to provide D2D communication by direct or multi-hop communication with other nodes or terminals on a peer level for providing service via the second communication network when operating in the D2D communication mode.

The network node may further be capable to work according to a base station communication mode where the network node when operating in the base station communication mode acts as a base station.

The communication mode may comprise providing backhaul via the second communication network to nodes or terminals within a cell served by the network node.

The network node according to the first aspect may be arranged to selectably work according to any of the device-to-device, D2D, communication mode and the base station communication mode. The network node may be arranged to select the base station communication mode or the D2D communication mode, or make transitions between the base station communication mode and the D2D communication mode, based on a predetermined traffic criteria.

The predetermined traffic criteria that causes a transition from the D2D communication mode to the base station communication mode may comprise that the number of terminals involved in D2D communication with the network node reaches a predetermined number.

The predetermined traffic criteria that causes a transition from the D2D communication mode to the base station communication mode may comprise that a service type provided by the communication with any terminal of other terminals requires a predetermined quality of service.

The predetermined traffic criteria that causes a transition from the base station communication mode to the D2D communication mode may comprise that the network node lack capability to meet service or traffic demands when operating in the base station communication mode.

The predetermined traffic criteria that causes a transition from the base station communication mode to the D2D communication mode may comprise that an interference level occurring between the cells operating in a heterogeneous network relation exceeds a predetermined level when operating in the base station communication mode.

The network node may be arranged to, at startup of its operation, select the D2D communication mode or be arranged to, at startup of its operation, select a user equipment, UE, communication mode.

The network node may be arranged to receive control information from a control node of the cellular communication system for enabling the work under control of the cellular communication network, wherein selection of D2D communication mode or base station communication mode is made from said control information. The control information may be received from any of a base station of the cellular communication system, a different radio network or core network node, an operation and maintenance node.

A base station serving a cell, within which the network node operates may apply frequency division duplex for uplink and downlink communication, and the communication under the D2D communication mode may be arranged to use only frequencies allocated to the base station for the uplink. The communication under the base station communication mode may be arranged to apply frequency division duplex for uplink and downlink communication and use frequencies allocated to the base station.

According to a second aspect, there is provided a method of operating a network node according to the first aspect. The method comprises selecting the base station communication mode or the D2D communication mode, or making transitions between the base station communication mode and the D2D communication mode, based on a predetermined traffic criteria.

The selecting may comprise any of causing a transition from the D2D communication mode to the base station communication mode when the number of terminals involved in D2D communication with the network node reaches a predetermined number; causing a transition from the D2D communication mode to the base station communication mode when a service type provided by the communication requires a predetermined quality of service; causing a transition from the base station communication mode to the D2D communication mode when the network node lack capability to meet service or traffic demands when operating in the base station communication mode; or causing a transition from the base station communication mode to the D2D communication mode when an interference level occurring between the cells operating in a heterogeneous network relation exceeds a predetermined level when operating in the base station communication mode.

The method may comprise selecting the D2D communication mode at startup of operation of the network node or comprise selecting a user equipment, UE, communication mode at startup of operation of the network node.

The method may comprise selecting the mobile terminal operation mode, or making transitions to the mobile terminal mode from any other communication mode, based on a predetermined traffic criteria, or some control command from the serving base station.

The method may comprise receiving control information from a node of the cellular communication system for enabling the work under control of the cellular communication network; and determining which of D2D communication mode or base station communication mode to select from said control information.

According to a third aspect, there is provided a computer program comprising computer-executable program code which, when downloaded and executed by a processor of a network node according to the first aspect, causes the network node to perform the method according to the second aspect.

### Brief description of the drawings

The above, as well as additional objects, features and advantages of the present invention, will be better understood through the following illustrative and non-limiting detailed description of preferred embodiments of the present invention, with reference to the appended drawings.
Fig. 1 schematically illustrates elements that may be involved in communication with a network node according to an embodiment.
Fig. 2 is a signal diagram schematically illustrating transition scenarios according to an embodiment.
Fig. 3 is a state diagram schematically illustrating methods according to embodiments.
Fig. 4 is a block diagram schematically illustrating a computer-readable medium and a processing device.
Fig. 5 schematically illustrates a network node having backhaul capability via a backbone network of the cellular communication system.
Fig. 6 schematically illustrates a network node enabled to work according to a device-to-device, D2D communication mode within a cellular communication system comprising a macro base station, wherein the network node also has backhaul capability via a second communication network distinct from a backbone network of the cellular communication network.

### Detailed description

In the following description, the term "network node" has been used as a general term, where a network node for example can be a base station, a relay, a user equipment (UE), etc. The term "UE" has been used for the sake of brevity, and the term should be construed as any device able to communicate wirelessly with network nodes of a cellular wireless communication system, such as for example cellphones (including also smartphones, screenpads with cellular communication capability, etc.), modems (including computers such as laptops, PLCs, controllers etc. with cellular communication capability), sensor and/or actuator devices with cellular communication capability, vending machines (including ticket machines, machines providing goods or services, etc.), access control stations (such as for door or gate access control, check-in stations, etc.), payment stations, automated information desks, vehicles, vessels, construction equipment, electronic road signs, speed cameras, asset management and/or monitoring devices, etc. with cellular communication capability, and similar devices. Furthermore, the term network node has been used since at least a part of the disclosure is about a network node changing its role from UE to base station, and vice versa, and from UE to service point, and vice versa, and from base station to service point, and vice versa. For example, the network node may be arranged to, at startup of its operation, act as a mobile terminal. The mobile terminal connection can be used to acquire information about operation modes and the configuration of operation modes. Such information and configurations can be obtained from the serving base station, a different radio network or core network node, an operation and maintenance node. The approach may comprise selecting the mobile terminal operation mode, or making transitions to the mobile terminal mode from any other communication mode, based on a predetermined traffic criteria, or some control command e.g. from the serving base station.

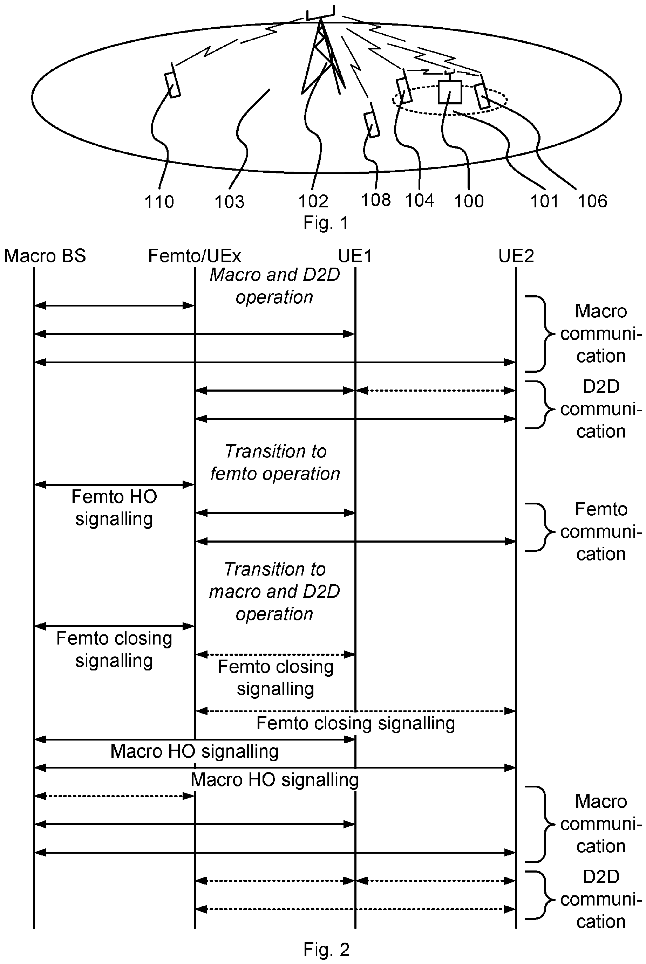

Fig. 1 schematically illustrates elements that may be involved in communication with a network node 100 according to an embodiment. A base station 102 operates a cell 103 of an access network of a cellular wireless communication system, and a number of devices 104, 106, 108, 110, as well as the network node 100 are assumed to operate within the cell 103. The network node 100 is also assumed to be in vicinity of devices 104, 106, enabling D2D communication between the devices 104, 106 and the network node 100. Furthermore, the network node 100 is also capable of operating as a base station of a cell 101 working in a heterogeneous network relation with the cell 103, e.g. a femtocell 101, wherein the devices 104, 106 are candidates for connecting to the cell 101, i.e. to perform handover to the cell 101.

The network node 100 is further assumed to have a backhaul capability directly to a backbone network of the cellular wireless communication network or through a second network distinct from the backbone network, e.g. a local area network or other computer network. These networks behind the access network are normally interconnected through gateways, and the structures for the more or less complex interconnections and intermediate networks are normally referred to as "the Cloud" or "the Internet".

The access network comprises a plurality of base stations similar to the depicted base station 102 operating cells similar to the cell 103 providing mobility for a user equipment, UE, working in the cellular wireless communication network.

For the case when the network node has backhaul capability through the second network, the network node 100 is enabled to work according to a D2D communication mode within access network. D2D communication means that network nodes, e.g. UEs, are enabled to communicate with each other on a peer level directly or through multihop where intermediate network nodes act as relays. The network node 100 is in addition to the D2D communication mode enabled to work according to a base station communication mode. Thus, the "network node" here has the capabilities of the different roles of being a UE or a linking node, where in turn the linking node can be a base station when operating in base station mode or a service point when operating in D2D communication mode, as will be demonstrated below.

When operating in the D2D communication mode, the network node 100 is enabled to act as D2D relay node enabling nodes or terminals 104, 106, with which D2D communication is performed on a peer level, to gain service via the second communication network. This can be performed under control of or assisted by the cellular communication network. The establishment of D2D communication can also be performed entirely on initiative on and through handshaking by the involved network nodes. For example, a UE 104 can gain access to the Internet through the second network by aid of the network node 100 which relays communication between the second network and the UE 104.

When the network node 100 is operating in the base station communication mode, it can act as a base station in a heterogeneous network relation to the base stations 102. This is performed within and under control of the cellular communication network, and a handover procedure can be applied for potential UEs 104, 106 for service or camping at either of the cells 101, 103. The network node 100 can then provide backhaul via the second communication network for the nodes or terminals 104, 106 within a femtocell 101 operated with the network node 100 as base station. A consideration to make when operating a femtocell 101 is that communication with the base station 102 can be heavily interfered by the communication within the femtocell 101 due to the inherent short distance to the network node 100 and the also inherent feature that the femtocell operation includes using the uplink and downlink frequencies allocated to the operation of the cell 103. This consideration is further elucidated below in this disclosure.

For the case when the network node has backhaul capability through the backbone network, e.g. where the network node 100, in the base station communication mode, acts as a base station in a heterogeneous network relation to the base station 102, the network node 100 can further be enabled to work according to a device-to-device, D2D communication mode within and under control of the cellular communication network. This is very much similar to what is demonstrated above, but taken from another angle, and having another way of providing the backhaul, i.e. through the backbone network. This applies for the D2D communication mode where it can provide backhaul via the backbone network of the cellular communication system to nodes or terminals 104, 106 with which D2D communication is performed on a peer level. Thus, the network node 100 can in the D2D communication mode act as D2D relay node enabling the nodes or terminals 104, 106, with which D2D communication is performed on a peer level, to gain service via the backbone network, possibly under control of or assisted by the cellular communication network.

On the other hand, when working in the base station communication mode, the network node 100 provides backhaul via the backbone network to the nodes or terminals 104, 106 camping or being served by it in its role as a base station within a femtocell 101.

In addition to these versatile features, i.e. being able to provided communication in different contexts, the network node can also be arranged to select a suitable way to work at any moment, i.e. according to either of the D2D communication mode or the base station communication mode. Thus, the network node 100 can be arranged to select the base station communication mode or the D2D communication mode, or make transitions between the base station communication mode and the D2D communication mode, which should be done based on a predetermined traffic criteria, preferably also taking into account traditional aspects as channel quality, signal strength, interference, etc. These traditional aspects can be channel quality indicator, CQI, or signal strength indicator, as Reference Signal Received Power (RSRP), Received Signal Code Power (RSCP), etc., or load indicator, such as Reference Signal Received Quality (RSRQ), received chip energy per band power density (Ec/No), etc.For example, the predetermined traffic criteria that causes a transition from the D2D communication mode to the base station communication mode can comprise that the number of terminals 104, 106 involved in D2D communication with the network node 100 reaches a predetermined first number. A transition in the other way can be that the number of terminals falls below a predetermined second number, where the second number is equal or lower than the first number.

In another example, the predetermined traffic criteria that causes a transition from the D2D communication mode to the base station communication mode comprises that a service type provided by the communication with any terminal of other terminals 104, 106 requires a predetermined quality of service. The opposite transition is also possible.

A further example where the predetermined traffic criteria is such that it causes a transition from the base station communication mode to the D2D communication mode comprises that the network node 100 lack capability to meet service or traffic demands when operating in the base station communication mode. The opposite transition is also possible.

Still a further example where the predetermined traffic criteria is such that it causes a transition from the base station communication mode to the D2D communication mode comprises that an interference level occurring between the cells operating in a heterogeneous network relation exceeds a predetermined level when operating in the femto base station communication mode. This criterion can also be used for a second consideration when judging a transition from D2D communication mode to base station communication mode, wherein the transition is avoided if expected interference cannot be accepted.

The network node 100 may be arranged to, at startup of its operation, act as a mobile terminal. The mobile terminal connection can be used to acquire information about operation modes and the configuration of operation modes. Such information and configurations can be obtained from the serving base station, a different radio network or core network node, an operation and maintenance node.

The network node 100 can be arranged to, at startup of its operation, select the D2D communication mode. Thereby can traffic situation as well as possible interference situation be judged before considering to enter the base station communication mode.

The selection can also be made under control of the cellular wireless communication system, which can be beneficial for keeping overall performance high. The network node 100 can thus be arranged to receive control information from a control node of the cellular communication system for enabling the work under control of the cellular communication network, wherein selection of D2D communication mode or base station communication mode is made from said control information. Such control information can be received from a base station 102 of the cellular communication system, e.g. through a control channel.

The allocation of frequencies to use for the different operation modes may also be an issue. The base station 102 operating the cell 103, within which the network node 100 operates, can for example apply frequency division duplex for uplink and downlink communication. The communication under the D2D communication mode can then be arranged to use only frequencies allocated to the base station 102 for the uplink. The downlink frequency of the base station 102 is thereby not interfered by the D2D communication. On the other hand, the communication under the base station communication mode is arranged to apply frequency division duplex for uplink and downlink communication and uses frequencies allocated to the base station 102. Thus, an interference situation with downlink traffic from the base station 102 may occur, as is elucidated in one of the examples above where a transition from the base station communication mode to the D2D communication mode can be initiated for this reason.

Fig. 2 is a signal diagram schematically illustrating transition scenarios according to an embodiment. Here, it is assumed that the devices 100, 104, 106 demonstrated with reference to Fig. 1 to have established D2D communication, where the network node 100 here is denoted Femto/UEx, and the other devices 104, 106 are denoted UE1 and UE2. The notation Femto/UEx is used since the network node will in a base station communication mode work as for example a femto base station, thus the use of the expression "Femto", and in a D2D communication mode work as a UE very much like UE1 and UE2, thus the use of the expression "UEx".

Starting from the top of the diagram, it is assumed that the base station, which corresponds to the base station 102 of Fig. 1, and the network node, corresponding to the network node 100 of Fig. 1, here as UEx, have an established communication. So does the base station have with the UE1 and UE2. These are therefore noted as "Macro communication" in the margin.

Consider then that D2D communication is set up between the UEx and UE1 and between UEx and UE2 (and possibly also between UE1 and UE2, as indicated by the dotted line), wherein communication is performed directly without the base station taking part in the communication. The base station may be involved by assisting setting up of the D2D communication, but this is not always necessary.

The UE1 and/or UE2 may desire to reach communication with for example the Internet, which can be provided through the backhaul capabilities of UEx which for that communication acts as a service point.

Upon a transition to base station communication mode, for reasons as for example demonstrated above, signalling is performed between UEx and the base station for setting up the UEx as a femto base station, i.e. become "Femto". Handover of UE1 and UE2 to the Femto is performed, and communication of UE1 and UE2 is handled through the Femto.

Upon a transition to Macro communication, handover of UE1 and/or UE2 is performed in traditional way. Closing of the Femto operation if no UEs remain served by the Femto can be performed, and suitable signalling is performed. The Macro communication is also as known from traditional cellular communication. The transition can also be made to D2D communication as indicated by the dotted lines at the bottom of the diagram, which can be set up similar to what was demonstrated for the operations elucidated with what was illustrated at the top of the diagram.

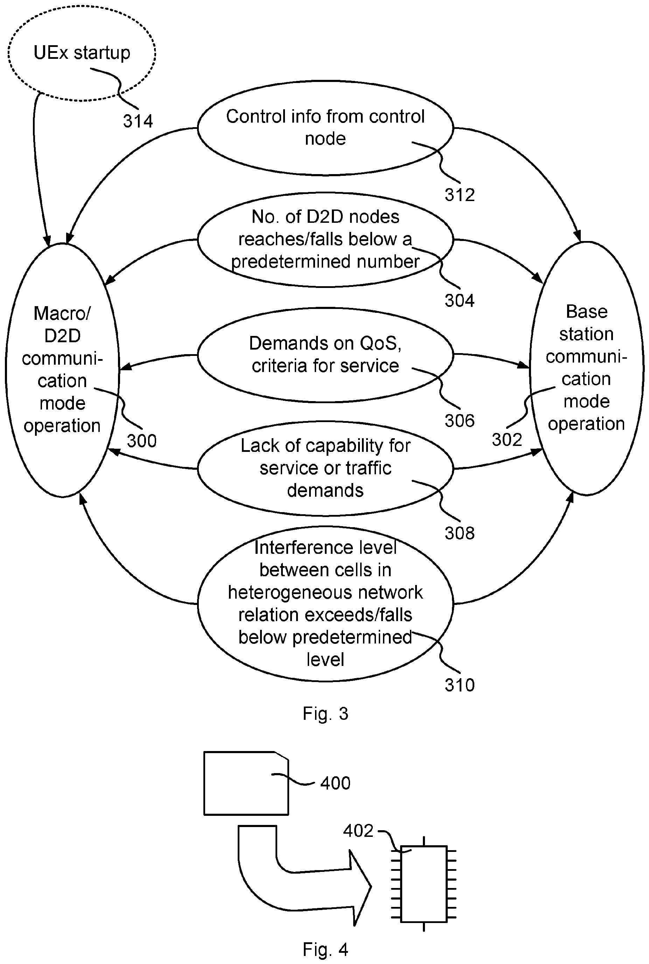

Fig. 3 is a state diagram schematically illustrating methods according to embodiments. Here, one or more of the illustrated transitions can be employed. Further, some of the transitions may be forced in some embodiments while other of the transitions may be optional in the same embodiments. Some examples will be given below. Furthermore, some embodiments may include the feature that the network node will at startup 314 automatically enter a macro/D2D communication mode 300. In addition to the macro/D2D communication mode 300, a base station communication mode 302 is present, where the network node acts as a base station in a heterogeneous network relation to one of the base stations corresponding to base station 102 of Fig. 1, as demonstrated above. Transitions between the modes 300, 302 can be made based on number of other network nodes in communication or potential communication with the network node, as illustrated by 304, demands on quality of service or other criteria for the service, as illustrated by 306, lack of capability for service and/or traffic demands, as illustrated by 308, and interference level between cells in heterogeneous network relation, as illustrated in 310. In addition to such event driven transitions, a transition between the modes 300, 302 can also be made based on control information provided from a control node of the communication network, as illustrated by 312.

The network node may be arranged to, at startup of its operation, act as a mobile terminal. The mobile terminal connection can be used to acquire information about operation modes and the configuration of operation modes. Such information and configurations can be obtained from the serving base station, a different radio network or core network node, an operation and maintenance node.

The methods according to the present invention is suitable for implementation with aid of processing means, such as computers and/or processors, especially for the case where the controller demonstrated above is a digital signal processor. Therefore, there is provided computer programs, comprising instructions arranged to cause the processing means, processor, or computer to perform the steps of any of the methods according to any of the embodiments described above. The computer programs preferably comprises program code which is stored on a computer readable medium 400, as illustrated in Fig. 4, which can be loaded and executed by a processing means, processor, or computer 402 to cause it to perform the methods, respectively, according to embodiments of the present invention, preferably as any of the embodiments described above. The computer 402 and computer program product 400 can be arranged to execute the program code sequentially where actions of the any of the methods are performed stepwise. However, the computer 402 and computer program product 400 can also be arranged to execute the program code on a real-time basis where actions of the any of the methods are performed when called upon and data for performing the respective action is available. The processing means, processor, or computer 402 is preferably what normally is referred to as an embedded system. Thus, the depicted computer readable medium 400 and computer 402 in Fig. 4 should be construed to be for illustrative purposes only to provide understanding of the principle, and not to be construed as any direct illustration of the elements.

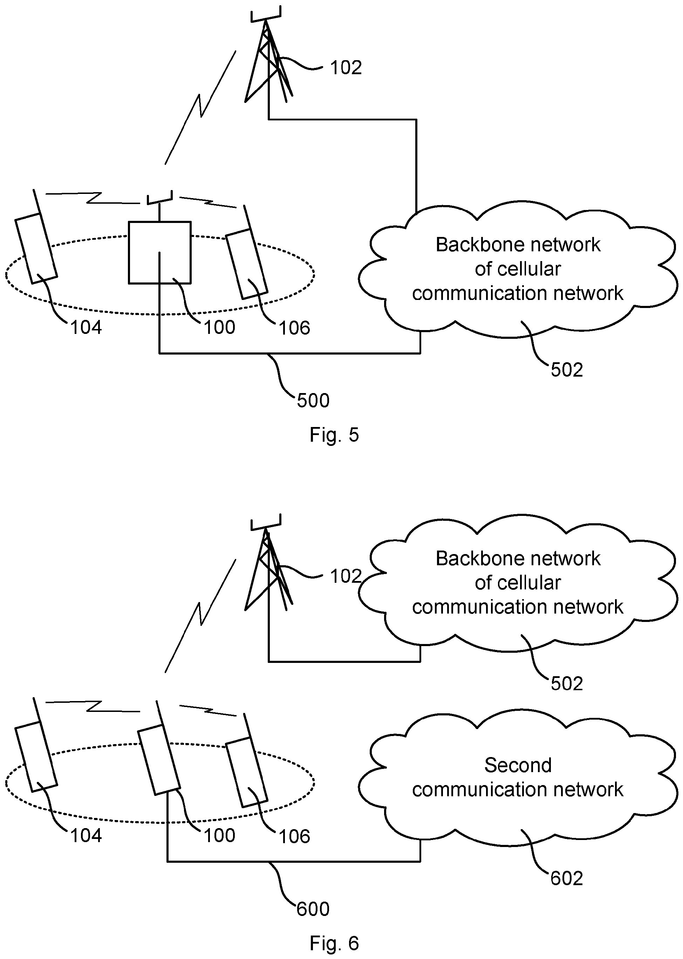

Fig. 5 schematically illustrates a network node 100 having backhaul capability to a backbone network 502 of the cellular communication network. For example, the backhaul capability is provided through a wired 500 connection. Considering a UE 106 desiring to provide a service where communication with the backbone network 502, e.g. to access the Internet via a gateway provided through the backbone network 502, may here have the options to establish communication with the following communication setups: via a base station 102 and the backbone network 702, or communication via the network node 100 through the connection 500 and the backbone network 502. The network node 100 can for providing the latter option either act as a D2D relay node to provide the communication for the UE 106 to the connection 500, or act as a base station for serving the UE 106, wherein backhaul for the base station communication mode is provided through the connection 500. Here, the network node 100 can be seen as a femto base station with the additional feature of switching to act like a D2D network node.

Fig. 6 schematically illustrates a network node 100 enabled to work according to a device-to-device, D2D communication mode within a cellular communication system comprising a base station 102, wherein the network node 100 also has backhaul capability, via a e.g. a wired connection 600, through a second communication network 600 distinct from a backbone network 502 of the cellular wireless communication network. Considering a UE 106 desiring to provide a service where access to the Internet, similar to the example of Fig. 5, may here have the options to establish communication with the following communication setups: via the base station 102 and the backbone network 502 and a gateway of the backbone network 502 to the Internet, communication via the network node 100 through the connection 600 and the second communication network 602 and a gateway of the second communication network 602 to the Internet. The network node 100 can for providing the latter option either act as a D2D relay node to provide the communication for the UE 106 to the connection 600, or act as a base station for serving the UE 106, wherein backhaul for the base station communication mode is provided through the connection 600. Here, the network node 100 can be seen as a D2D network node, e.g. a UE, with the additional feature of switching to act like a femto base station. Further, since the network node 100 has backhaul capabilities through the connection 600 to a second communication network 602, the network node 100 can also be seen as an access point with capabilities to work as a femto base station, and also act as a D2D network node having the options of backhaul capabilities through the connection 600 to the second communication network.

## Claims

1. A network node (100) capable to work, within a cellular communication system comprising a plurality of base stations (102), according to a device-to-device, D2D, communication mode, **characterised by** the network node (100) also having backhaul (600) capability via a second communication network (602) distinct from a backbone network (502) of the cellular communication network and is capable to provide D2D communication by direct or multi-hop communication with other nodes or terminals (104, 106) on a peer level for providing service via the second communication network (602) when operating in the D2D communication mode.

2. The network node (100) according to claim 1, wherein the network node (100) is further capable to work according to a base station communication mode where the network node (100) when operating in the base station communication mode acts as a base station.

3. The network node (100) according to claim 2, wherein the base station communication mode comprises providing backhaul via the second communication network to nodes or terminals (104, 106) within a cell (101) served by the network node (100).

4. The network node (100) according to any of claims 1 to 3, arranged to selectably work according to any of the device-to-device, D2D, communication mode and the base station communication mode, the network node (100) is arranged to select the base station communication mode or the D2D communication mode, or make transitions between the base station communication mode and the D2D communication mode, based on a predetermined traffic criteria, wherein the predetermined traffic criteria comprises any of
that the number of terminals (104, 106) involved in D2D communication with the network node (100) reaches a predetermined number;
that a service type provided by the communication with any terminal of other terminals (104, 106) requires a predetermined quality of service;
that the network node (100) lack capability to meet service or traffic demands when operating in the base station communication mode;
that an interference level occurring between the cells operating in a heterogeneous network relation exceeds a predetermined level when operating in the base station communication mode; and
that the network node (100) is at startup of its operation.

5. The network node (100) according to claim 4, wherein the predetermined traffic criteria that causes a transition from the D2D communication mode to the base station communication mode comprises that the number of terminals (104, 106) involved in D2D communication with the network node (100) reaches a predetermined number.

6. The network node (100) according to claim 4 or 5, wherein the predetermined traffic criteria that causes a transition from the D2D communication mode to the base station communication mode comprises that a service type provided by the communication with any terminal of other terminals (104, 106) requires a predetermined quality of service.

7. The network node (100) according to any of claims 4 to 6, wherein the predetermined traffic criteria that causes a transition from the base station communication mode to the D2D communication mode comprises that the network node (100) lack capability to meet service or traffic demands when operating in the base station communication mode.

8. The network node (100) according to any of claims 4 to 7, wherein the predetermined traffic criteria that causes a transition from the base station communication mode to the D2D communication mode comprises that an interference level occurring between the cells operating in a heterogeneous network relation exceeds a predetermined level when operating in the base station communication mode.

9. The network node (100) according to any of claims 4 to 8, being arranged to, at startup of its operation, select the D2D communication mode, or be arranged to, at startup of its operation, select a user equipment, UE, communication mode.

10. The network node (100) according to any of claims 4 to 9, being arranged to receive control information from a control node of the cellular communication system for enabling the work under control of the cellular communication network, wherein selection of D2D communication mode or base station communication mode is made from said control information.

11. The network node (100) according to claim 10, wherein the control information is received from any of a base station (102) of the cellular communication system, a different radio network or core network node, an operation and maintenance node..

12. The network node (100) according to any of claims 4 to 11, wherein a base station (102) serving a cell (103), within which the network node (100) operates, applies frequency division duplex for uplink and downlink communication, and the communication under the D2D communication mode is arranged to use only frequencies allocated to the base station (102) for the uplink.

13. The network node (100) according to any of claims 4 to 12, wherein a base station (102) operating a cell (103), within which the network node (100) operates, applies frequency division duplex for uplink and downlink communication, and the communication under the base station communication mode is arranged to apply frequency division duplex for uplink and downlink communication and using frequencies allocated to the base station (102).

14. A method of operating a network node according to any of claims 1 to 13, the method is **characterised by**
selecting the base station communication mode or the D2D communication mode, or making transitions between the base station communication mode and the D2D communication mode, based on a predetermined traffic criteria, wherein the predetermined traffic criteria comprises any of
that the number of terminals (104, 106) involved in D2D communication with the network node (100) reaches a predetermined number;
that a service type provided by the communication with any terminal of other terminals (104, 106) requires a predetermined quality of service;
that the network node (100) lack capability to meet service or traffic demands when operating in the base station communication mode;
that an interference level occurring between the cells operating in a heterogeneous network relation exceeds a predetermined level when operating in the base station communication mode; and
that the network node (100) is at startup of its operation.

15. The method according to claim 14, wherein selecting comprises any of
causing a transition (304) from the D2D communication mode (300) to the base station communication mode (302) when the number of terminals involved in D2D communication with the network node reaches a predetermined number;
causing a transition (306) from the D2D communication mode (300) to the base station communication mode (302) when a service type provided by the communication requires a predetermined quality of service;
causing a transition (308) from the base station communication mode (302) to the D2D communication mode (300) when the network node lack capability to meet service or traffic demands when operating in the base station communication mode (302); or
causing a transition (310) from the base station communication mode (302) to the D2D communication mode (300) when an interference level occurring between the cells operating in a heterogeneous network relation exceeds a predetermined level when operating in the base station communication mode (302).

16. The method according to claim 14 or 15, comprising selecting the D2D communication mode (300) at startup (314) of operation of the network node or comprising selecting a user equipment, UE, communication mode at startup (314) of operation of the network node.

17. The method according to any of claims 14 to 16, comprising
receiving control information from a node of the cellular communication system for enabling the work under control of the cellular communication network; and
determining (312) which of D2D communication mode (300) or base station communication mode (302) to select from said control information.

18. A computer program comprising computer-executable program code which, when downloaded and executed by a processor (402) of a network node according to any of claims 1 to 13, is **characterised by** causing the network node to perform the method according to any of claims 14 to 17.

## Patentansprüche

1. Netzwerkknoten (100), der imstande ist, innerhalb eines zellularen Kommunikationssystems mit einer Mehrzahl von Basisstationen (102) gemäß einem Gerätzu-Gerät, D2D,-Kommunikationsmodus zu funktionieren, **dadurch gekennzeichnet, dass** der Netzwerkknoten (100) außerdem Backhaul (600)-Fähigkeit über ein zweites Kommunikationsnetzwerk (602) aufweist, das von einem Backbone-Netzwerk (502) des zellularen Kommunikationsnetzwerks verschieden ist, und imstande ist, bei Betrieb im D2D-Kommunikationsmodus D2D-Kommunikation durch direkte oder Multihop-Kommunikation mit anderen Knoten oder Endgeräten (104, 106) auf einer Partnerebene zum Bereitstellen von Diensten über das zweite Kommunikationsnetzwerk (602) bereitzustellen.

2. Netzwerkknoten (100) nach Anspruch 1, wobei der Netzwerkknoten (100) ferner imstande ist, gemäß einem Basisstationskommunikationsmodus zu funktionieren, wobei der Netzwerkknoten (100) bei Betrieb im Basisstationskommunikationsmodus als eine Basisstation fungiert.

3. Netzwerkknoten (100) nach Anspruch 2, wobei der Basisstationskommunikationsmodus ein Bereitstellen von Backhaul über das zweite Kommunikationsnetzwerk für Knoten oder Endgeräte (104, 106) innerhalb einer Zelle (101) umfasst, die vom Netzwerkknoten (100) versorgt wird.

4. Netzwerkknoten (100) nach einem der Ansprüche 1 bis 3, ausgelegt, um selektiv gemäß einem von dem Gerät-zu-Gerät, D2D,-Kommunikationsmodus und dem Basisstationskommunikationsmodus zu funktionieren, wobei der Netzwerkknoten (100) so ausgelegt ist, dass er basierend auf einem vorbestimmten Verkehrskriterium den Basisstationskommunikationsmodus oder den D2D-Kommunikationsmodus auswählt oder Übergänge zwischen dem Basisstationskommunikationsmodus und dem D2D-Kommunikationsmodus durchführt, wobei das vorbestimmte Verkehrskriterium eines von Folgendem umfasst:
die Anzahl von Endgeräten (104, 106), die an der D2D-Kommunikation mit dem Netzwerkknoten (100) beteiligt sind, erreicht eine vorbestimmte Anzahl;
ein Diensttyp, der durch die Kommunikation mit einem Endgerät von anderen Endgeräten (104, 106) bereitgestellt wird, erfordert eine vorbestimmte Dienstqualität;
der Netzwerkknoten (100) hat bei Betrieb im Basisstationskommunikationsmodus nicht die Fähigkeit zum Erfüllen von Dienst- oder Verkehrsanforderungen;
ein Störpegel, der zwischen den Zellen auftritt, die in einer heterogenen Netzwerkbeziehung funktionieren, überschreitet bei Betrieb im Basisstationskommunikationsmodus einen vorbestimmten Pegel; und
der Netzknoten (100) ist beim Start seines Betriebs.

5. Netzwerkknoten (100) nach Anspruch 4, wobei das vorbestimmte Verkehrskriterium, das einen Übergang vom D2D-Kommunikationsmodus zum Basisstationskommunikationsmodus bewirkt, umfasst, dass die Anzahl von Endgeräten (104, 106), die an der D2D-Komunikation mit dem Netzwerkknoten (100) beteiligt sind, eine vorbestimmte Anzahl erreicht.

6. Netzwerkknoten (100) nach Anspruch 4 oder 5, wobei das vorbestimmte Verkehrskriterium, das einen Übergang vom D2D-Kommunikationsmodus zum Basisstationskommunikationsmodus bewirkt, umfasst, dass ein Diensttyp, der durch die Kommunikation mit einem Endgerät von anderen Endgeräten (104, 106) bereitgestellt wird, eine vorbestimmte Dienstqualität erfordert.

7. Netzwerkknoten (100) nach einem der Ansprüche 4 bis 6, wobei das vorbestimmte Verkehrskriterium, das einen Übergang vom Basisstationskommunikationsmodus zum D2D-Kommunikationsmodus bewirkt, umfasst, dass der Netzwerkknoten (100) bei Betrieb im Basisstationskommunikationsmodus nicht die Fähigkeit zum Erfüllen von Dienst- oder Verkehrsanforderungen hat.

8. Netzwerkknoten (100) nach einem der Ansprüche 4 bis 7, wobei das vorbestimmte Verkehrskriterium, das einen Übergang vom Basisstationskommunikationsmodus zum D2D-Kommunikationsmodus bewirkt, umfasst, dass ein Störpegel, der zwischen den Zellen auftritt, die in einer heterogenen Netzwerkbeziehung funktionieren, bei Betrieb im Basisstationskommunikationsmodus einen vorbestimmten Pegel überschreitet.

9. Netzwerkknoten (100) nach einem der Ansprüche 4 bis 8, der so ausgelegt ist, dass er bei Betriebsstart den D2D-Kommunikationsmodus auswählt, oder so ausgelegt ist, dass er bei Betriebsstart einen Benutzereinrichtungs, UE,-Kommunikationsmodus auswählt.

10. Netzwerkknoten (100) nach einem der Ansprüche 4 bis 9, der so ausgelegt ist, dass er Steuerinformationen von einem Steuerknoten des zellularen Kommunikationssystems zum Ermöglichen von Arbeit unter der Kontrolle des zellularen Kommunikationsnetzwerks empfängt, wobei die Auswahl des D2D-Kommunikationsmodus oder des Basisstationskommunikationsmodus aus den Steuerinformationen durchgeführt wird.

11. Netzwerkknoten (100) nach Anspruch 10, wobei die Steuerinformationen von einem von einer Basisstation (102) des zellularen Kommunikationssystems, einem anderen Funknetzwerk- oder Kernnetzwerkknoten oder einem Betriebs- und Wartungsknoten empfangen werden.

12. Netzwerkknoten (100) nach einem der Ansprüche 4 bis 11, wobei eine Basisstation (102), die eine Zelle (103) versorgt, innerhalb derer der Netzwerkknoten (100) funktioniert, Frequenzduplex für Uplink- und Downlink-Kommunikation anwendet, und die Kommunikation gemäß dem D2D-Kommunikationsmodus so ausgelegt ist, dass sie nur Frequenzen verwendet, die der Basisstation (102) für den Uplink zugewiesen sind.

13. Netzwerkknoten (100) nach einem der Ansprüche 4 bis 12, wobei eine Basisstation (102), die eine Zelle (103) versorgt, innerhalb derer der Netzwerkknoten (100) funktioniert, Frequenzduplex für Uplink- und Downlink-Kommunikation anwendet, und die Kommunikation gemäß dem Basisstationskommunikationsmodus so ausgelegt ist, dass sie Frequenzduplex für Uplink- und Downlink-Kommunikation anwendet und Frequenzen verwendet, die der Basisstation (102) zugewiesen sind.

14. Verfahren zum Betreiben eines Netzwerkknotens nach einem Ansprüche 1 bis 13, wobei das Verfahren **gekennzeichnet ist durch**:
Auswählen des Basisstationskommunikationsmodus oder des D2D-Kommunikationsmodus oder Durchführen von Übergängen zwischen dem Basisstationskommunikationsmodus und dem D2D-Kommunikationsmodus basierend auf einem vorbestimmten Verkehrskriterium, wobei das vorbestimmte Verkehrskriterium eines von Folgendem umfasst:
die Anzahl von Endgeräten (104, 106), die an der D2D-Kommunikation mit dem Netzwerkknoten (100) beteiligt sind, erreicht eine vorbestimmte Anzahl;
ein Diensttyp, der **durch** die Kommunikation mit einem Endgerät von anderen Endgeräten (104, 106) bereitgestellt wird, erfordert eine vorbestimmte Dienstqualität;
der Netzwerkknoten (100) hat bei Betrieb im Basisstationskommunikationsmodus nicht die Fähigkeit zum Erfüllen von Dienst- oder Verkehrsanforderungen;
ein Störpegel, der zwischen den Zellen auftritt, die in einer heterogenen Netzwerkbeziehung funktionieren, überschreitet bei Betrieb im Basisstationskommunikationsmodus einen vorbestimmten Pegel; und
der Netzknoten (100) ist beim Start seines Betriebs.

15. Verfahren nach Anspruch 14, wobei das Auswählen ein beliebiges umfasst von
Bewirken eines Übergangs (304) vom D2D-Komunikationsmods (300) zum Basisstationskommunikationsmodus (302), wenn die Anzahl von Endgeräten, die an der D2D-Kommunikation mit dem Netzwerkknoten beteiligt sind, eine vorbestimmte Anzahl erreicht;
Bewirken eines Übergangs (306) vom D2D-Komunikationsmods (300) zum Basisstationskommunikationsmodus (302), wenn ein Diensttyp, der durch die Kommunikation bereitgestellt wird, eine vorbestimmte Dienstqualität erfordert;
Bewirken eines Übergangs (308) vom Basisstationskommunikationsmodus (302) zum D2D-Kommunikationsmodus (300), wenn der Netzwerkknoten bei Betrieb im Basisstationskommunikationsmodus (302) nicht die Fähigkeit zum Erfüllen von Dienst- oder Verkehrsanforderungen hat; oder
Bewirken eines Übergangs (310) vom Basisstationskommunikationsmodus (302) zum D2D-Kommunikationsmodus (300), wenn ein Störpegel, der zwischen den Zellen auftritt, die in einer heterogenen Netzwerkbeziehung funktionieren, bei Betrieb im Basisstationskommunikationsmodus (302) einen vorbestimmten Pegel überschreitet.

16. Verfahren nach Anspruch 14 oder 15, umfassend ein Auswählen des D2D-Kommunikatinsmodus (300) bei Start (314) des Betriebs des Netzwerkknotens, oder umfassend ein Auswählen eines Benutzereinrichtungs, UE,-Kommunikationsmodus bei Start (314) des Betriebs des Netzwerkknotens.

17. Verfahren nach einem der Ansprüche 14 bis 16, umfassend:
Empfangen von Steuerinformationen von einem Knoten des zellularen Kommunikationssystems zum Ermöglichen von Arbeit unter der Kontrolle des zellularen Kommunikationsnetzwerks; und
Bestimmen (312) aus den Steuerinformationen, welcher von dem D2D-Kommunikationsmodus (300) oder dem Basisstationskommunikationsmodus (302) ausgewählt werden soll.

18. Computerprogramm, umfassend computerausführbaren Programmcode, der **dadurch gekennzeichnet ist, dass** er, wenn heruntergeladen und von einem Prozessor (402) eines Netzwerkknotens nach einem der Ansprüche 1 bis 13 ausgeführt, den Netzwerkknoten zum Durchführen des Verfahrens nach einem der Ansprüche 14 bis 17 veranlasst.

## Revendications

1. Noeud de réseau (100) capable de fonctionner, à l'intérieur d'un système de communication cellulaire comprenant une pluralité de stations de base (102), selon un mode de communication de dispositif à dispositif, D2D,
**caractérisé en ce que** le noeud de réseau (100) comporte également une capacité de liaison terrestre (600) par l'intermédiaire d'un deuxième réseau de communication (602) distinct d'un réseau de dorsale (502) du réseau de communication cellulaire et est capable de fournir une communication D2D par une communication directe ou à sauts multiples avec d'autres noeuds ou terminaux (104, 106) à un niveau de pair pour fournir un service par l'intermédiaire du deuxième réseau de communication (602) lors d'un fonctionnement dans le mode de communication D2D.

2. Noeud de réseau (100) selon la revendication 1, dans lequel le noeud de réseau (100) est en outre capable de fonctionner selon un mode de communication de station de base, où le noeud de réseau (100), lorsqu'il fonctionne dans le mode de communication de station de base, agit en tant qu'une station de base.

3. Noeud de réseau (100) selon la revendication 2, dans lequel le mode de communication de station de base comprend la fourniture d'une liaison terrestre par l'intermédiaire du deuxième réseau de communication à des noeuds ou des terminaux (104, 106) à l'intérieur d'une cellule (101) desservie par le noeud de réseau (100).

4. Noeud de réseau (100) selon l'une quelconque des revendications 1 à 3, agencé pour fonctionner sélectivement selon l'un quelconque du mode de communication de dispositif à dispositif, D2D, et du mode de communication de station de base, le noeud de réseau (100) étant agencé pour sélectionner le mode de communication de station de base ou le mode de communication D2D ou effectuer des transitions entre le mode de communication de station de base et le mode de communication D2D, sur la base d'un critère de trafic prédéterminé, dans lequel le critère de trafic prédéterminé comprend l'un quelconque de :
le nombre de terminaux (104, 106) participant à une communication D2D avec le noeud de réseau (100) atteint un nombre prédéterminé ;
un type de service fourni par la communication avec n'importe quel terminal d'autres terminaux (104, 106) nécessite une qualité de service prédéterminée ;
le noeud de réseau (100) n'a pas la capacité de satisfaire des demandes de service ou de trafic lorsqu'il fonctionne dans le mode de communication de station de base ;
un niveau d'interférence entre les cellules fonctionnant dans une relation de réseau hétérogène dépasse un niveau prédéterminé en fonctionnement dans le mode de communication de station de base ; et
le noeud de réseau (100) est au début de son fonctionnement.

5. Noeud de réseau (100) selon la revendication 4, dans lequel le critère de trafic prédéterminé provoquant une transition du mode de communication D2D au mode de communication de station de base comprend que le nombre de terminaux (104, 106) participant à une communication D2D avec le noeud de réseau (100) atteint un nombre prédéterminé.

6. Noeud de réseau (100) selon la revendication 4 ou 5, dans lequel le critère de trafic prédéterminé provoquant une transition du mode de communication D2D au mode de communication de station de base comprend qu'un type de service fourni par la communication avec n'importe quel terminal d'autres terminaux (104, 106) nécessite une qualité de service prédéterminée.

7. Noeud de réseau (100) selon l'une quelconque des revendications 4 à 6, dans lequel le critère de trafic prédéterminé provoquant une transition du mode de communication de station de base au mode de communication D2D comprend que le noeud de réseau (100) n'a pas la capacité de satisfaire des demandes de service ou de trafic lorsqu'il fonctionne dans le mode de communication de station de base.

8. Noeud de réseau (100) selon l'une quelconque des revendications 4 à 7, dans lequel le critère de trafic prédéterminé provoquant une transition du mode de communication de station de base au mode de communication D2D comprend qu'un niveau d'interférence entre les cellules fonctionnant dans une relation de réseau hétérogène dépasse un niveau prédéterminé en fonctionnement dans le mode de communication de station de base.

9. Noeud de réseau (100) selon l'une quelconque des revendications 4 à 8, agencé pour, au début de son fonctionnement, sélectionner le mode de communication D2D, ou agencé pour, au début de son fonctionnement, sélectionner un mode de communication d'équipement d'utilisateur, UE.

10. Noeud de réseau (100) selon l'une quelconque des revendications 4 à 9, agencé pour recevoir des informations de commande en provenance d'un noeud de commande du système de communication cellulaire pour permettre le fonctionnement sous le contrôle du réseau de communication cellulaire, dans lequel une sélection du mode de communication D2D ou du mode de communication de station de base est effectuée à partir desdites informations de commande.

11. Noeud de réseau (100) selon la revendication 10, dans lequel les informations de commande sont reçues en provenance de l'un quelconque d'une station de base (102) du système de communication cellulaire, d'un noeud de réseau radio ou de réseau central différent, et d'un noeud de fonctionnement et de maintenance.

12. Noeud de réseau (100) selon l'une quelconque des revendications 4 à 11, dans lequel une station de base (102) desservant une cellule (103), à l'intérieur de laquelle le noeud de réseau (100) fonctionne, applique un duplexage par répartition de fréquences pour une communication de liaison montante et de liaison descendante, et la communication dans le mode de communication D2D est agencée pour utiliser uniquement des fréquences allouées à la station de base (102) pour la liaison montante.

13. Noeud de réseau (100) selon l'une quelconque des revendications 4 à 12, dans lequel une station de base (102) faisant fonctionner une cellule (103), à l'intérieur de laquelle le noeud de réseau (100) fonctionne, applique un duplexage par répartition de fréquences pour une communication de liaison montante et de liaison descendante, et la communication dans le mode de communication de station de base est agencée pour appliquer un duplexage par répartition de fréquences pour une communication de liaison montante et de liaison descendante et utiliser des fréquences allouées à la station de base (102).

14. Procédé de fonctionnement d'un noeud de réseau selon l'une quelconque des revendications 1 à 13, le procédé étant **caractérisé par** les étapes consistant à :
sélectionner le mode de communication de station de base ou le mode de communication D2D ou effectuer des transitions entre le mode de communication de station de base et le mode de communication D2D, sur la base d'un critère de trafic prédéterminé, dans lequel le critère de trafic prédéterminé comprend l'un quelconque de :
le nombre de terminaux (104, 106) participant à une communication D2D avec le noeud de réseau (100) atteint un nombre prédéterminé ;
un type de service fourni par la communication avec n'importe quel terminal d'autres terminaux (104, 106) nécessite une qualité de service prédéterminée ;
le noeud de réseau (100) n'a pas la capacité de satisfaire des demandes de service ou de trafic lorsqu'il fonctionne dans le mode de communication de station de base ;
un niveau d'interférence entre les cellules fonctionnant dans une relation de réseau hétérogène dépasse un niveau prédéterminé en fonctionnement dans le mode de communication de station de base ; et
le noeud de réseau (100) est au début de son fonctionnement.

15. Procédé selon la revendication 14, dans lequel la sélection comprend l'une quelconque des étapes consistant à :
provoquer une transition (304) du mode de communication D2D (300) au mode de communication de station de base (302) lorsque le nombre de terminaux participant à une communication D2D avec le noeud de réseau atteint un nombre prédéterminé ;
provoquer une transition (306) du mode de communication D2D (300) au mode de communication de station de base (302) lorsqu'un type de service fourni par la communication nécessite une qualité de service prédéterminée ;
provoquer une transition (308) du mode de communication de station de base (302) au mode de communication D2D (300) lorsque le noeud de réseau n'a pas la capacité de satisfaire des demandes de service ou de trafic en fonctionnement dans le mode de communication de station de base (302) ; ou
provoquer une transition (310) du mode de communication de station de base (302) au mode de communication D2D (300) lorsqu'un niveau d'interférence entre les cellules fonctionnant dans une relation de réseau hétérogène dépasse un niveau prédéterminé en fonctionnement dans le mode de communication de station de base (302).

16. Procédé selon la revendication 14 ou 15, comprenant la sélection du mode de communication D2D (300) au début (314) du fonctionnement du noeud de réseau ou comprenant la sélection d'un mode de communication d'équipement d'utilisateur, UE, au début (314) du fonctionnement du noeud de réseau.

17. Procédé selon l'une quelconque des revendications 14 à 16, comprenant les étapes consistant à :
recevoir des informations de commande en provenance d'un noeud du système de communication cellulaire pour permettre le fonctionnement sous le contrôle du réseau de communication cellulaire ; et
déterminer (312) lequel du mode de communication D2D (300) ou du mode de communication de station de base (302) doit être sélectionné à partir desdites informations de commande.

18. Programme informatique comprenant un code de programme exécutable par ordinateur qui, lorsqu'il est téléchargé et exécuté par un processeur (402) d'un noeud de réseau selon l'une quelconque des revendications 1 à 13, est **caractérisé en ce qu'**il amène le noeud de réseau à effectuer le procédé selon l'une quelconque des revendications 14 à 17.
